# EUROPÄISCHE PATENTSCHRIFT

(11) **EP 0 652 807 B1**
(45) Veröffentlichungstag und Bekanntmachung des Hinweises auf die Patenterteilung: **27.05.1998**
(21) Anmeldenummer: 94910317.0
(22) Anmeldetag: 04.02.1994
(51) Int. Cl.: B03B 9/06, B09B 3/00

(54) **VERFAHREN UND VORRICHTUNG ZUR AUFBEREITUNG VON ÖLHALTIGEN BETRIEBSSTOFFEN**
PROCESSING METHOD AND DEVICE FOR OIL-CONTAINING OPERATING MATERIALS
PROCEDE ET DISPOSITIF PERMETTANT DE TRAITER DES MATERIAUX D'EXPLOITATION CONTENANT DE L'HUILE

(30) Priorität: 10.02.1993 DE 4303802
(43) Veröffentlichungstag der Anmeldung: 17.05.1995
(73) Patentinhaber: AGR Abfallentsorgungs-Gesellschaft Ruhrgebiet mit beschränkter Haftung, 45127 Essen (DE)
(72) Erfinder: KLAFKE, Dieter, D-45481 Mülheim (DE); MÖLLER, Hermann, D-45661 Recklinghausen (DE); WECKER, Heinrich, D-59597 Erwitte (DE)
(74) Vertreter: Vomberg, Friedhelm, Dipl.-Phys.
(86) Internationale Anmeldenummer: DE9400121
(87) Internationale Veröffentlichungsnummer: WO9417918

(56) Entgegenhaltungen:
- EP-A- 0 422 501
- EP-A- 0 432 513
- WO-A-93/01898
- DE-A- 3 621 836
- DE-A- 4 028 761
- DE-B- 2 151 819

## Beschreibung

Die Erfindung betrifft ein Verfahren zur Rückgewinnung von aufbereitungsfähigem Altöl, metallischen Rohstoffen und Kunststoffen aus stark ölbelasteten Betriebsstoffen, insbesondere von Öl, Metallen und Kunststoffen aus gewerblichem Industriemüll nach dem Oberbegriff des Anspruchs 1 und und eine entsprechende Vorrichtung.

Die EP-A-0 422 501 beschreibt ein derartiges Verfahren und eine solche Vorrichtung, allerdings werden die von den Störstoffen befreiten Kunststoff- und Metallfraktionen nach dem Zerkleinern einer Waschtrommel zugeführt. Als Waschflüssigkeit soll heißes Wasser, ggf. mit Sodazusatz verwendet werden. Die Waschflüssigkeit wird nach einer Ölabscheidung entsorgt.

Die DE 40 28 761 A1 beschreibt ein Verfahren zum Aufbereiten von Abfall für die Verbrennung, wobei die Abfallteile gereinigt, magnetische Teile abgetrennt und dem zu verbrennenden Abfallanteil anderer Stoffe zugemischt werden. Zum Reinigen des abgetrennten magnetischen Abfallanteiles werden brennbare Saugmittel, wie Sägemehl benutzt, die die Verbrennung fördern können.

Aufgrund des ständig knapper werdenden Deponieraumes und der strengen gesetzlichen Vorschriften zum Umweltschutz ist es mehr denn je vonnöten, Stoffe aus dem Müll auszusondern, die sich wirtschaftlich wiederverwerten bzw. zur Wiederverwertung aufbereiten lassen. Dazu gehören insbesondere Metalle, Altöl und Kunststoffe, deren Deponierung oder Verbrennung starke Umweltbelastungen zur Folge hätten, die andererseits auch solche Stoffe darstellen, die durchaus wirtschaftlich einer Wiederverwertung zuführbar sind.

Bei nach dem Stand der Technik bekannten Verfahren ist es bekannt, die Kunststoffe auf einem Leseband zu separieren und einem Shredder zuzuführen. Der Shredder hat die Aufgabe, etwa eingeschlossene Hohlräume mit Ölinhalten aufzuschließen. Das im Shredder abfallende Öl wird in Ölabsetzbecken gesammelt und das verwertbare, vom Schlamm getrennte Öl einer Ölaufbereitungsanlage zugeführt. Die den Shredder verlassenden Kunststoffe werden einer Waschtrommel zugeführt, um etwa noch anhaftendes Öl abzuspülen. Im nachgeschalteten Schwimm-Sink-Abscheider werden je nach Schwimmfähigkeit unterschiedliche Kunststoffe abgeschöpft, getrocknet, nachzerkleinert und einer Recyclierung zugeführt. Die auf dem Leseband angeordneten Metallteile oder Stücke mit Metallgehalten werden einem Fe-Abscheider zugeführt, womit die Nichtmetalle als Reststoffe abgetrennt werden können.

Sowohl die Reststoffe als auch die noch Metalle enthaltenden Teile werden gepreßt. Erfahrungen zeigen jedoch, daß der Zweck des Preßvorganges, nämlich das Herauspressen von Öl, nur unzureichend erzielt werden kann, da beim Pressen Öl in verbleibenden Hohlräumen eingeschlossen werden kann und somit die metallhaltige Fraktion weiterhin belastet. Darüber hinaus sind ölverschmutzte oder ölhaltige Teile, wie beispielsweise Motorölfilter, nach dem Pressen und Auflockern zum Teil derart scharfkantig, daß nachgeschaltete Separatoren beschädigt werden können. Soweit das die Presse verlassende Material einer weiteren Magnetabscheidung unterzogen werden soll, reicht die vorhergehende Schwingrinnenauflockerung nicht aus, um die Metallfraktion von Nichtmetallen hinreichend zu reinigen. Erforderlich ist in jedem Falle ein abschließender Waschvorgang für die metallhaltigen Substanzen, womit über die Waschlösung weitere Chemikalien und Energie zugeführt werden müssen. Nachteiligerweise lassen sich die in Metallteilen eingeschlossenen Fremdstoffe, wie beispielsweise Pappe, nicht hinreichend von den Metallteilen trennen, so daß der Fremdstoffrestgehalt in der separierten Metallfraktion relativ hoch ist.

Es ist Aufgabe der vorliegenden Erfindung, für die genannten stark verunreinigten Ausgangsstoffe ein Verfahren und eine Vorrichtung anzugeben, mit dem bzw. der eine Rückgewinnung von aufbereitungsfähigem Altöl, metallischen Rohstoffen und Kunststoffen höchstmöglicher Reinheit bzw. minimaler Verunreinigung möglich ist. Das Verfahren und die Vorrichtung sollen leicht handhabbar und ohne großen Energie- oder weiteren Materialaufwand betreibbar sein.

Die Aufgabe wird durch das im Anspruch 1 beschriebene Verfahren gelöst. Hierbei werden die aufgegebenen Betriebsstoffe in jeweilige Kunststoff- und Metallfraktionen sowie in eine dritte Fraktion, die die von Störstoffen befreiten Reststoffe enthält, vorsortiert und getrennt, wonach anschließend die in der Kunststoff- und der Metallfraktion enthaltenen Teile zerkleinert und hiernach zur Ölabscheidung in Zentrifugen zentrifugiert werden, wobei von den genannten Reststoffen das Öl durch Abtropfen und/oder Pressen abgetrennt wird.

Das Zentrifugieren von Spänen, die bei Zerspanungsvorgängen anfallen, ist zwar nach dem Stand der Technik bekannt, jedoch dient dieses Verfahren lediglich der Rückgewinnung der Kühl- und Schmiermittel, die unmittelbar ohne Aufbereitung wieder dem Zerspanprozeß zugeführt werden.

Ebenfalls ist es aus der DE-B 21 51 819 zur Aufbereitung von feuchten Metallspänen zum Wiedereinschmelzen bekannt, die zerkleinerten feuchten Späne durch Zentrifugieren in bekannter Weise zu trocknen und mittels einer Walzenbrikettmaschine in Formkörper hoher Dichte und Festigkeit zu verpressen. Zur Trocknung soll eine Entölungszentrifuge dienen. In beiden Fällen handelt es sich um reine Metalle bzw. Metallegierungen, die keiner weiteren Separierung bedürfen.

Aus der DE 36 21 836 A1 ist ferner ein Behandlungsverfahren für ölverunreinigte feste Abfälle, z.B. Ölfilter, Ölbindemittel, Putzlappen oder Leergebinde, bekannt, bei dem eine weitgehende Trennung der verschiedenen Abfallkomponenten in Metalle und Nichteisenabfälle sowie sonstigen Restabfall vorgenommen werden soll. Allerdings sollen auch hiernach lediglich die eisenhaltigen Abfälle zerkleinert und von Restöl befreit werden.

Demgegenüber war es überraschend, daß bei Einsatz einer Zentrifuge bei der Behandlung von vorsortiertem Gewerbemüll eine bessere Befreiung der Kunststoff- und der Metallfraktionen von Öl bietet als dies bisher Pressen und Waschvorgänge leisten konnten. Vorteilhafterweise kann bei diesen Fraktionen nach dem Zentrifugieren grundsätzlich auch auf den Waschvorgang vollständig verzichtet werden, da der Grad der Ölbefreiung hinreichend groß ist. Nur in Ausnahmefällen, nämlich falls hochreine Metalle oder Kunststoffe gewünscht werden, bei denen ein extrem niedriger Verunreinigungswert gewünscht wird, kann ein abschließender Waschvorgang vorgesehen werden. Hierdurch läßt sich jedoch eine größere Befreiung von Verunreinigungen erzielen als dies bisher nach dem Stand der Technik möglich gewesen ist.

Weiterbildungen des Verfahrens sind in den Ansprüchen 2 bis 9 beschrieben.

So werden die Metalle und metallhaltigen Stücke als Teil der kunststoffbefreiten Fraktion einem Metall-Abscheidungsprozeß in einem Magnetabscheider oder einem Wirbelstromabscheider nach einer Vorsortierung unterzogen.

Vorzugsweise werden die metallhaltigen Stücke und die Metalle vor dem Zentrifugieren einer Shredder-Zerkleinerung zugeführt, wobei das Material einen hervorragenden Aufschluß erfährt, der eine größtmögliche spätere Ölabscheidung in der Zentrifuge ermöglicht.

Parallel zu der Behandlung der Metallfraktion wird nach Vorsortierung die Kunststofffraktion aussortiert und vor dem Zentrifugieren in einem Shredder zerkleinert, wobei die Zerkleinerung bis hin zu einer maximalen Kornfraktion von 25 mm erfolgt. Wäscht man die Kunststoffe nach dem Zentrifugieren, können weitere Fremdstoffe wie auch Öl abgewaschen werden, so daß gut gereinigte Kunststoffe entweder direkt der Kunststoffverwertung oder in einer nachgeschalteten Naßschneidemühle durch Nachzerkleinern behandelt werden können.

Nach einer weiteren Ausgestaltung der Erfindung können die nachzerkleinerten Kunststoffe in einem Schwimm-Sink-Abscheider in einzelne Fraktionen, wie PVC, PET und PS von den Polyolephinen PE und PP getrennt werden. Die Polyolephine lassen sich als schwimmende Substanzen abrahmen, anschließend trocknen und einer Regranulierung zuführen.

Alternativ hierzu ist es ebenso möglich, die Kunststoffe nach dem Zentrifugieren zu waschen, zu trocknen und einer separaten Kunststoffverwertung zuzuführen.

Reststoffe, die weder Metallanteile noch Kunststoffteile aufweisen, werden über einen Lesebandüberlauf einer Schneckenpresse zur Entölung zugeführt. Diese Verfahrenstechnik empfiehlt sich, da die dem Schneckenpressen unterworfenen Reststoffe nicht wiederverwertet werden sollen.

Vorzugsweise werden die an Abtropfstellen beim Zerkleinern (Shreddern) und/oder aus der Schneckenpresse gewonnenen, zum Teil schlammartig anfallenden Öle einem Absetzbehälter zugeführt, der nach einer weiteren Ausgestaltung der Erfindung in regelmäßigen zeitlichen Abständen von seinem schwerkraftbedingt sich unten absetzenden Sumpf befreit wird. Dieser Sumpf wird wiederum der Zentrifuge zugeführt. Vorzugsweise wird mit einer Siebmaschengröße von maximal 60 µm zentrifugiert. Das hierdurch gewonnene Öl ist hinreichend von Festkörpern einschließlich Stäuben befreit.

Nach einer weiteren Ausgestaltung der Erfindung werden der Schneckenpresse auch die in den Metallabscheidern separierten nichtmetallischen Reststoffe zur Entölung oder Restentölung zugeführt.

Vorrichtungstechnisch wird die der Erfindung zugrundeliegende Aufgabe durch die im Anspruch 10 beschriebene Vorrichtung gelöst, bei der vorgesehen sind: Eine Aufgabestelle, ein Leseband zur Trennung der aufgegebenen Betriebsstoffe in eine Metall-, eine Kunststoff- und eine dritte Fraktion, die die verbleibenden, von Störstoffen befreiten Reststoffe enthält, sowie zur Behandlung der Metallfraktion jeweils nachgeschaltet ein Metallabscheider, mindestens ein Shredder sowie eine Zentrifuge, zur Behandlung der Kunststofffraktion jeweils nachgeschaltet ein Shredder, eine Zentrifuge und eine Waschtrommel und zur Behandlung der Reststoffe eine Schneckenpresse, wobei die Shredder, die Zentrifugen und die Schneckenpresse jeweils mit Ölauffangvorrichtungen verbunden sind.

Weiterbildungen der Vorrichtung werden in den Ansprüchen 11 bis 14 beschrieben, wobei sich in entsprechender Weise die vorbeschriebenen Vorteile ergeben.

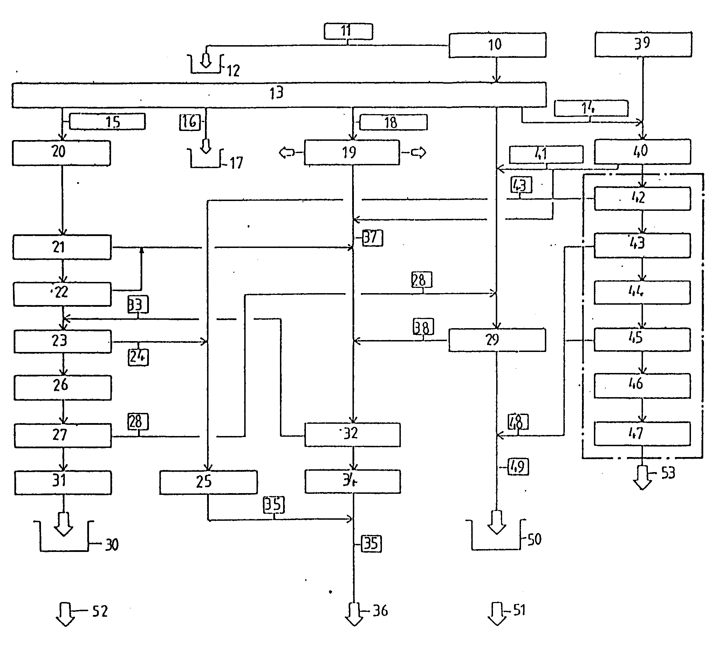

Ein Ausführungsbeispiel der Erfindung wird anhand des Verfahrensschemas in der Abbildung erläutert.

Nach Aufgabe der Betriebsstoffe 10, einer Mischung aus gewerblichem Industriemüll, beispielsweise durch Kippung des angelieferten Materials auf ein Zuführband, werden zunächst sofort erkennbare nicht verwertbare Kunststoffe und Reststoffe 11 separiert und als nichtmetallische Störstoffe in einem Behälter 12 abgelegt. Die verbleibende Müllfraktion wird auf ein Leseband 13 gegeben, von wo aus Kunststoffe 14, verunreinigt mit Öl und Reststoffen, sowie Gemische von Metallteilen, Öl und Reststoffen 15 separiert werden. Per Hand wird sogenannter Kernschrott 16 einschließlich großer Metallbehälter aussortiert und in den Container 17 gegeben. Diese Stoffe sind für eine Shredderbearbeitung ungeeignet. Ebenso werden weitere Großbehälter aus Eisen und Kunststoff 18 mit der Öffnung nach unten auf einen Abtropfrost einer Abtropfstelle 19 gestellt und nach einer längeren Abtropfzeit manuell in die dafür vorgesehenen Container geworfen. Auch diese Materialien können einer Wiederverwertung zugeführt werden. Die sogenannte Metallfraktion 15 wird mittels eines Überbandmagneten 20 vom Leseband 13 entnommen und dem ersten Shredder (Grobshredder) 21 zugeführt. Hierbei handelt es sich um einen Shredder, der die eingegebenen Stoffe längsteilt und so ausrichtet, daß im zweiten Shredder 22 eine Nachzerkleinerung durchgeführt werden kann, wobei im wesentlichen in der Draufsicht quadratische Blechstreifen in Briefmarkengröße entstehen. Das den Feinshredder 22 verlassende Material ist optimal für die Zentrifuge 23 vorbereitet, von wo aus das gereinigte Öl 24 einem Ölbehälter 25 zugeführt wird. Das vom Öl befreite Material wird über eine Schwingrinne 26 einem weiteren Metallabscheider 27 zugeführt, von wo aus etwa noch enthaltene Reststoffe 28 abgesondert werden, die zur Restentölung einer Schneckenpresse 29 zugeführt werden, worauf später noch eingegangen werden wird. Die vom Öl und Reststoffen befreiten Metallteile können entweder unmittelbar in einen Metallcontainer 30 überführt werden oder - zur Gewinnung höchstreiner Stoffe - einer Waschtrommel 31 übergeben werden. Das die Zentrifuge verlassende Öl ist bei einer Maschenweite der Zentrifuge von 60 µm von Fremdstoffen befreit.

Das an der Abtropfstelle 19, den Shreddern 20, 21 und 40 oder den Restkunststoffen 41 anfallende Öl 37 und das aus der Schneckenpresse 29 gewonnene Öl 38 werden einem Ölabsetzbehälter 32 zugeführt, dessen am Boden abgesetzten Schlämme 33 kontinuierlich oder diskontinuierlich der Zentrifuge 23 zurückgeführt werden. Das aus dem Ölabsetzbehälter gewonnene Öl wird in den Ölbehälter 34 überführt, von wo das dort gewonnene Öl ebenso wie das aus dem Behälter 25 entnommene Öl 35 einer Ölaufbereitungsanlage 36 (siehe Pfeil) zugeführt werden. Die hierdurch geschaffene Entölung der Metallteile ist ebenso optimiert wie die Trennung der Feststoffe, im wesentlichen Metall, Papier und Verunreinigungen werden hingegen in der Schwingrinne 26 aufgelockert und voneinander gelöst.

Die Reststoffe gelangen über den Lesebandüberlauf ebenfalls in die Schneckenpresse 29. Dort werden die Reststoffe zusammen mit den übrigen Reststoffen 28 entölt, wobei das Öl 38 in den Ölabsetzbehälter 32 geführt wird.

Die Kunststofffraktion 14 sowie weitere gegebenenfalls manuell aufgegebene Kunststoffe 39 werden einem Shredder 40 zugeführt. Ungeeignetes Material an Kunststoffen sowie Reststoffen 41 wird der Schneckenpresse zugeleitet, während die übrigen Kunststoffteile in eine Zentrifuge 42 gegeben werden. Das dort ausscheidende Öl 43 wird unmittelbar dem Ölbehälter zugeführt. Das entölte Material wird anschließend in einer Waschtrommel 43 gewaschen. Hiernach werden entweder die gewaschenen Kunststoffteile direkt der Wiederverwertung 53 zugeführt oder sie durchlaufen die mit Ziffern 44 bis 47 gekennzeichneten Vorrichtungsteile. Diese bestehen aus einer Naßschneidmühle 44 zur Nachzerkleinerung, einem nachgeschalteten Schwimm-Sink-Abscheider 45 zur Abtrennung von Verunreinigungen, PVC, PET und PS von den Polyolephinen PE und PP, dem Trockner 46 und der Regranulierung 47. Die Polyolephine werden im Schwimm-Sink-Abscheider 45 obenschwimmend abgerahmt, bevor sie dem Trockner zugeführt werden. Die in der Waschtrommel und dem Schwimm-Sink-Abscheider anfallenden nicht verwertbaren Reststoffe 48 wie auch die übrigen aus anderen Prozessen anfallenden Reststoffe werden in einen Reststoffcontainer 50 gegeben, welcher einer Sondermüllverbrennung 51 zugeleitet wird. Der Eisencontainerinhalt ist für die Stahlindustrie 52, während das Recyclat 47 für die Kunststoffverwertung 53 nutzbar sind.

Alternativ hierzu ist es auch möglich, die Kunststoffe nach dem Zentrifugieren und Waschen zu trocknen und einer separaten Kunststoffverwertung zuzuführen.

Die gesamte Vorrichtung wird so ausgelegt, daß die Kunststofffraktion, die Metallfraktion und die Reststoffe eine maximale Kapazität von je 3 t/h erreicht wird. Es sind jedoch auch geringere Durchsätze möglich, wobei die genannte Leistung eine obere Grenze darstellt.

Insbesondere die Aufbereitung des Metalles und des Öles sind in der vorliegenden Form nach dem bekannten Stand der Technik noch nicht praktiziert worden. Besonderheiten sind darin zu sehen, daß die Metallfraktion durch zwei Zerkleinerungen und einer Ausrichtung optimal vorbereitet wird für eine gute Abtrennung des Öles von den Feststoffen und später für die Trennung des Metalles von Papier und anderen Reststoffen. Die Entölung des Materials erfolgt vorzugsweise mittels kontinuierlich arbeitender Zentrifugen 23, womit ein vom Öl befreites Metall gewonnen werden kann, das im Normalfall für eine spätere Wiederverwertung nicht mehr gewaschen werden muß und durch den hohen Zerkleinerungsgrad weitgehend frei von Fremdeinschlüssen, z.B. durch Papier und Reststoffe, ist. Die nach dem Magnetabscheider 27 separierten Reststoffe 28 in Form von Papier und Kehricht etc. werden zur Nachentölung der Schneckenpresse 29 zugeführt. Bei dem Preßvorgang wird das in den Kapillaren befindliche Öl ausgepreßt und so eine weitgehende ölfreie Reststofffraktion im Container 50 erreicht.

Das Öl aus der Schneckenpresse 29 wird in einem Absetzbehälter 32 zur Feststoffabscheidung zwischengelagert, wobei der Sumpf des Absetzbehälters 32 ebenfalls über die Zentrifuge 23 entölt und das Öl dem Vorratsbehälter 25 zugeführt wird. Hierdurch wird erreicht, daß der Wertstoff Öl frei von Feststoffen ist und die Reststoffe einen sehr geringen Ölgehalt aufweisen. Die besonderen Vorteile des erfindungsgemäßen Verfahrens bzw. der erfindungsgemäßen Vorrichtung liegen darin, daß verhältnismäßig reines Metall ohne einen Waschvorgang bzw. höchstreines Metall mit Waschvorgang, ein geringer Feststoffgehalt im Wertstoff Öl und eine hohe Ölausbeute und dadurch eine Minimierung der Reststoffe erzielbar sind.

## Patentansprüche

1. Verfahren zur Rückgewinnung von aufbereitungsfähigem Altöl, metallischen Rohstoffen und Kunststoffen aus stark ölbelasteten Betriebsstoffen, insbesondere von Öl, Metallen und Kunststoffen aus gewerblichem Industriemüll, durch Vorsortierung und Trennung der aufgegebenen Betriebsstoffe in jeweilige Kunststoff- und Metallfraktionen sowie in eine dritte Fraktion, die die von Störstoffen befreiten Reststoffe enthält, anschließendes Zerkleinern der in der Kunststoff- und der Metallfraktion enthaltenen Teile und die mechanische Abscheidung des Öles aus diesen Teile und dessen Rückgewinnung, wobei ein getrenntes Ölabscheiden von den Reststoffen durch Abtropfen und/oder Pressen erfolgt,
**dadurch gekennzeichnet**,
daß die mechanische Abscheidung des Öles aus der Kunststoff- und der Metallfraktion in Zentrifugen durch Zentrifugieren erfolgt, wobei die Zentrifugen und/oder die Pressen mit Ölauffangvorrichtungen verbunden sind.

2. Verfahren nach Anspruch 1, dadurch gekennzeichnet, daß die Metalle und die metallhaltigen Stücke einem Metall-Abscheidungsprozeß in einem Magnetabscheider oder einem Wirbelstromabscheider nach der Vorsortierung unterzogen werden und/oder nach der Zentrifugierung über eine Schwingrinne einem weiteren Metallabscheider zugeleitet werden.

3. Verfahren nach Anspruch 1 oder 2, dadurch gekennzeichnet, daß die metallhaltigen Stücke und die Metalle vor dem Zentrifugieren einer Shredder-Zerkleinerung zugeführt werden, vorzugsweise durch eine zweistufige Shredder-Zerkleinerung, bei der in einer ersten Stufe die metallhaltigen Stücke und Metalle in Streifen von maximal 30 mm, vorzugsweise maximal 20 mm, Breite geschnitten und in der zweiten Stufe zu einer Korngröße von maximal 25 mm, vorzugsweise maximal 20 mm, zerkleinert werden, wobei vorzugsweise die in Längsstreifen geschnittenen Teile vor der weiteren Zerkleinerung in Längsrichtung ausgerichtet und danach quer zur Längsrichtung geschnitten werden.

4. Verfahren nach einem der Ansprüche 1 bis 3, dadurch gekennzeichnet, daß die aufgegebenen oder in der Vorsortierung angefallenen Kunststoffe vor dem Zentrifugieren in einem Shredder zerkleinert werden, vorzugsweise zu einer maximalen Kornfraktion von 25 mm und/oder daß die Kunststoffteile nach dem Zentrifugieren gewaschen und anschließend direkt der Kunststoffverwertung oder in einer Naßschneidmühle nachzerkleinert werden.

5. Verfahren nach einem der Ansprüche 1 bis 4, dadurch gekennzeichnet, daß die Kunststoffe nach dem Waschen und gegebenenfalls dem Nachzerkleinern einem Schwimm-Sink-Abscheider zugeführt und hierin Verunreinigungen, PVC, PET und PS von den Polyolephinen PE und PP getrennt werden, wobei vorzugsweise die Polyolephine als schwimmende Substanzen abgerahmt, getrocknet und einer Regranulierung zugeführt werden.

6. Verfahren nach einem der Ansprüche 1 bis 5, dadurch gekennzeichnet, daß die weder Metallanteile noch Kunststoffe darstellenden Reststoffe über einen Lesebandüberlauf einer Schneckenpresse zur Entölung zugeführt werden.

7. Verfahren nach einem der Ansprüche 1 bis 6, dadurch gekennzeichnet, daß die aus dem Zerkleinern (Shreddern) und/oder der Schneckenpresse gewonnenen oder beim Transport oder an einer Abtropfstelle abtropfenden, zum Teil schlammartig anfallenden Öle einem Absetzbehälter zugeführt werden, wobei vorzugsweise in regelmäßigen zeitlichen Abständen der Absetzbehältersumpf entnommen und der Zentrifuge zugeführt wird.

8. Verfahren nach einem der Ansprüche 1 bis 7, dadurch gekennzeichnet, daß mit einer Siebmaschengröße von maximal 60 µm zentrifugiert wird.

9. Verfahren nach einem der Ansprüche 1 bis 8, dadurch gekennzeichnet, daß die in dem oder den Metall-Abscheider(n) separierten nichtmetallischen Reststoffe einer Schneckenpresse zur Entölung oder Restentölung zugeführt werden.

10. Vorrichtung zur Rückgewinnung von aufbereitungsfähigem Altöl, metallischen Rohstoffen und Kunststoffen aus stark ölhaltigen oder ölbelasteten Betriebsstoffen, mit einer Aufgabestelle (10), einem Leseband (13) zur Trennung der aufgegebenen Betriebsstoffe (10) in eine Metall- (15), eine Kunststoff- (14) und eine dritte Fraktion, die die verbleibenden, von Störstoffen befreiten Reststoffe enthält, sowie zur Behandlung der Metallfraktion (15) jeweils nachgeschaltet einem Metallabscheider (20), mindestens einem Shredder (21, 22) sowie einer Zentrifuge (23), zur Behandlung der Kunststofffraktion (14) jeweils nachgeschaltet einem Shredder (40), einer Zentrifuge (42) und einer Waschtrommel (43) und zur Behandlung der Reststoffe einer Schneckenpresse (29), wobei die Shredder (20, 21 und 40), die Zentrifugen (23, 42) und die Schneckenpresse (29) jeweils mit Ölauffangvorrichtungen (25, 32, 34) verbunden sind.

11. Vorrichtung nach Anspruch 10, dadurch gekennzeichnet, daß die Zentrifuge (23) kontinuierlich arbeitet und/oder eine Maschenweite von maximal 60 µm aufweist.

12. Vorrichtung nach Anspruch 10 oder 11, dadurch gekennzeichnet, daß zwei Shredder (21, 22) der Zentrifuge (23) vorgeschaltet sind, wovon der erste (21) das aufgegebene Material in Längsstreifen teilt und eine Ausrichtvorrichtung für die Längsstreifen aufweist, die die ausgerichteten Längsstreifen in einem zweiten Shredder (22) zur Querteilung führt, und/oder daß der Zentrifuge (23) eine Schwingrinne (26) und ein weiterer Metallabscheider (27) nachgeschaltet sind.

13. Vorrichtung nach einem der Ansprüche 10 bis 12, dadurch gekennzeichnet, daß zur Kunststoffteilbehandlung ein Shredder (40), eine Zentrifuge (42), eine Waschtrommel (43), eine Naßschneidmühle (44), ein Schwimm-Sink-Abscheider (45) und ein Trockner (46) hintereinandergeschaltet sind.

14. Vorrichtung nach einem der Ansprüche 10 bis 13, dadurch gekennzeichnet, daß die Shredder (21, 22, 40) und die Schneckenpresse (29) und/oder das Leseband (13) und/oder eine separate Abtropfstelle mit einem vorzugsweise gemeinsamen Ölabsetzbehälter (32) verbunden sind, wobei der Ölabsetzbehälter (32) vorzugsweise mit einer im Bodenbereich angeordneten Sumpfabzugsvorrichtung ausgestattet ist, worüber der Sumpf einer Zentrifuge (23) zugeführt wird.

## Claims

1. Method for recovering upgradable waste oil, metal raw material and synthetic material from extremely oil-loaded operating materials, in particular of oil, metals and synthetic materials from industrial wastes by previous assortment and separation of the charged operation material in particular synthetic and metal fractions as well as a third fraction which contains the rest material freed from fault materials, following the comminution of parts contained in the synthetic and metal fraction, and the mechanical separation of oil from these parts and its recovering, whereby a separate deposition of oil from the rest material is made by dripping off and/or by pressing,
**characterised in that**
the mechanical separation of oil from the synthetic and metal fraction occurs in centrifuges by centrifuging whereby the centrifuges and/or the presses are connected with an oil collecting device.

2. Method according to claim 1, characterised in that the metals and the metal-containing parts are subjected to a metal separating process in a magnet separator or in an eddy current separator after the centrifuging operation and/or are lead to a further metal separator after the centrifuging operation by a swinging conduit.

3. Method according to claim 1 or 2, characterised in that the metal-containing pieces and the metals are lead to a shredding comminution, preferably through a two-step shredding comminution, whereby at the first step the metal-containing pieces and metals are cut into stripes of maximal 30 mm width, preferably maximal 20 mm width and at the second step are comminuted to a grain size of maximal 25 mm, preferably maximal 20 mm, whereby preferably the pieces cut in longitudinal stripes are adjusted in longitudinal direction before comminution and after that are cut at right angles to the longitudinal direction.

4. Method according to one of claims 1 to 3, characterised in that the feed or in previous assortment transpired synthetic materials are comminuted in a shredder before centrifuging, preferably at a maximum grain fraction of 25 mm and/or that the synthetic material parts are washed after centrifuging and then directly be comminuted further in a synthetic material exploitation or a wet cutting mill.

5. Method according to one of claims 1 to 4, characterised in that the synthetic material after being washed and if applicable further comminuted is lead to a floating-sink-elimination and wherein impurities, PVC, PET, and PS are separated from Polyolephine PE and PP, whereby preferably Polyolephine as a swimming substance is skimmed off, dried and lead to regranulation.

6. Method according to one of claims 1 to 5, characterised in that the neither metal parts nor synthetic material representing rest material is lead over a gathering assembly overflow of a worm press for oil trapping.

7. Method according to one of claims 1 to 6, characterised in that the transpired partly muddy oil extracted from comminution (shredding) and/or of the worm press or by transferring or by dripping off at a dripping place, is lead to a precipation tank whereby preferably at periodically temporal intervals the swamp of the precipation tank is taken off and lead to the centrifuge.

8. Method according to one of claims 1 to 7, characterised in that centrifuging is made with a maximum mesh size of 60 µm.

9. Method according to one of claims 1 to 8, characterised in that the non-metallic rest material separated in one or more metal-separator(s) is lead to a worm press for oil trapping or last oil trapping.

10. Device for recovering upgradable waste oil, metal raw material and synthetic material of extremely oil-loaded or oil-containing operating materials with a charging place (10), a gathering assembly (13) for separating the charged operating material (10) into a metal fraction (15), a synthetic fraction (14) and a third fraction which contains the rest material freed from interfering material, just as tandem-arranged a metal separator (20), at least a shredder (21, 22) and a centrifuge (23) for treatment of the metal fraction (15), for treatment of the synthetic material fraction (14) respectively tandem-arranged a shredder (40), a centrifuge (42) and a washing drum (43), and for treatment of the rest material a worm press (29), whereby the shredders (20, 21, and 40), the centrifuges (23, 42) and the worm press (29) in each case are connected with oil collecting devices (25, 32, 34).

11. Device according to claim 10, characterised in that the centrifuge (23) is continuously working and/or has a mesh width of maximal 60 µm.

12. Device according to claim 10 or 11, characterised in that two shredder (21, 22) are tandem-arranged before the centrifuge (23) whereby the first one (21) cuts the charged material in longitudinal stripes and the shown off adjustment device for the longitudinal stripes leads them correctly adjusted to the second shredder (22) where they get cross-cut, and/or that after the centrifuge (23) are tandem-arranged a swinging conduit (26) and a further metal-separator (27).

13. Device according to one of the claims 10 to 12, characterised in that for treatment of synthetic material parts a shredder (40), a centrifuge (42), a wash drum (43), a wet cutting mill (44), a swimming-sink-separator (45), and a drier (46) are tandemly arranged.

14. Device according to one of the claims 10 to 13, characterised in that the shredder (21, 22, 40) and the snail press (29) and/or the reading assembly (13) and/or a separate dripping place, preferably connected by a combined oil settling tank (32), whereby preferably the oil settling tank (32) is equipped with a swamp outlet device on the bottom through that the swamp is lead to the centrifuge (23).

## Revendications

1. Procédé de récupération d'huile usée qui peut être préparée, de matières premières métalliques et de matières synthétiques venant de matériaux d'exploitation fortement chargés d'huile, en particulier d'huile, de métaux et matières synthétiques en provenance de déchets industriels, par triage préalable et séparation des matériaux d'exploitation chargés en fractions respectives de matières synthétiques et de métaux ainsi qu'en une troisième fraction qui contient les matières résiduelles libérées de matières perturbatrices, par broyage subséquent des parties contenues dans la fraction de matières synthétiques et dans la fraction de métaux et la séparation mécanique de l'huile de ces parties et sa récupération, une séparation séparée de l'huile des matières résiduelles étant effectuée par égouttage et/ou par pressage,
**caractérisé par le fait**
que la séparation mécanique de l'huile de la fraction de matières synthètiques et de la fraction de métaux est effectuée dans des centrifugeuses par centrifugation, les centrifugeuses et/ou les presses communiquant avec des dispositifs collecteurs d'huile.

2. Procédé selon la revendication 1, caractérisé par le fait que les métaux et les pièces métallifères sont soumis, après le triage préalable, à un processus de séparation de métal dans un séparateur magnétique ou un séparateur à courant de Foucault et/ou sont amenés, après la centrifugation, à un autre séparateur de métal par l'intermédiaire d'un couloir vibrant.

3. Procédé selon la revendication 1 ou 2, caractérisé par le fait que les pièces métallifères et les métaux sont amenés, avant la centrifugation, à un broyage dans un shredder, de préférence un broyage dans un shredder en deux étapes, dans le cas duquel, dans une première étape, les pièces métallifères et les métaux sont coupés en bandes ayant une largeur de 30 mm au maximum, de préférence de 20 mm au maximum, et, dans la deuxième étape, ils sont broyés de manière à présenter une grosseur de grain de 25 mm au maximum, de préférence de 20 mm au maximum, de préférence, les pièces coupées en bandes longitudinales étant orientées, avant l'autre broyage, en direction longitudinale et étant coupées ensuite transversalement à la direction longitudinale.

4. Procédé selon l'une des revendications 1 à 3, caractérisé par le fait que les matières synthétiques chargées ou résultant lors du triage préalable sont broyées, avant la centrifugation, dans un shredder, de préférence à une fraction ganulométrique maximale de 25 mm et/ou que les parties en matière synthétique sont lavées après la centrifugation et sont ensuite amenées directement à la récupération de matières synthétiques ou sont soumises à un broyage ultérieur dans un moulin de coupe par voie humide.

5. Procédé selon l'une des revendications 1 à 4, caractérisé par le fait que, après le lavage et, le cas échéant, après le broyage ultérieur, les matières synthétiques sont amenées à un séparateur de flottant et plongeant où des impuretés, du PVC, PET et PS sont séparés des polyoléfines PE et PP, de préférence, les polyoléfines étant écumées en tant que substances flottante, étant séchées et amenées à une regranulation.

6. Procédé selon l'une des revendications 1 à 5, caractérisé par le fait que les matières résiduelles qui ne présentent ni des parties métalliques ni des matières synthétiques sont amenées, en passant sur une bande de triage, à une presse à vis pour être déshuilées.

7. Procédé selon l'une des revendications 1 à 6, caractérisé par le fait que les huiles en partie boueuses obtenues du broyage (découpage dans le shredder) et/ou de la presse à vis ou qui égouttent lors du transport ou dans un lieu d'égouttage sont amenées à un réservoir de sédimentation, de préférence, la vase du réservoir de sédimentation étant enlevée à intervalles réguliers et étant amenée à la centrifugeuse.

8. Procédé selon l'une des revendications 1 à 7, caractérisé par le fait que l'on centrifuge avec une grandeur de maille du tamis de 60 µm au maximum.

9. Procédé selon l'une des revendications 1 à 8, caractérisé par le fait que les matières résiduelles non-métalliques séparées dans le ou les sépararteur(s) de métal sont amenées à une presse à vis pour être déshuilées ou bien pour en enlever l'huile résiduelle.

10. Dispositif pour la récupération d'huile usée qui peut être préparée, de matières premières métalliques et de matières synthétiques venant de matériaux d'exploitation fortement huileux ou chargés d'huile, comportant un point de chargement (10), une bande de triage (13) pour la séparation des matériaux d'exploitation chargés (10) en une fraction de métal (15), une fraction de matières synthétiques (14) et en une troisième fraction qui contient les matières résiduelles libérées de matières perturbatrices, ainsi que, pour le traitement de la fraction de métal (15), un séparateur de métal (20), au moins un shredder (21, 22) et une centrifugeuse (23) montés respectivement en série, pour le traitement de la fraction de matières synthétiques (14), un shredder (40), une centrifugeuse (42) et un tambour laveur (43) montés respectivement en série, et, pour le traitement des matières résiduelles, une presse à vis (29), les shredders (20, 21 et 40), les centrifugeuses (23, 42) et la presse à vis (29) communiquant respectivement avec des dispositifs collecteurs d'huile (25, 32, 34).

11. Dispositif selon la revendication 10, caractérisé par le fait que la centrifugeuse (23) travaille de façon continue et/ou présente une largeur des mailles de 60 µm au maximum.

12. Dispositif selon la revendication 10 ou 11, caractérisé par le fait que les deux shredders (21, 22) sont placé en amont de la centrifugeuse (23), dont le premier (21) sépare le matériau chargé en bandes longitudinales et présente un dispositif d'orientation pour les bandes longitudinales, qui conduit les bandes longitudinales orientées vers un deuxième shredder (22) destiné à la séparation transversale, et/ou qu'un couloir vibrant (26) et un autre séparateur de métal (27) sont montés à la suite de la centrifugeuse (23).

13. Dispositif selon l'une des revendications 10 à 12, caractérisé par le fait que, pour le traitement de la fraction de matières synthétiques, un shredder (40), une centrifugeuse (42), un tambour laveur (43), un moulin de coupe par voie humide (44), un séparateur de flottant et plongeant (45) et un sécheur (46) sont placés en série.

14. Dispositif selon l'une des revendications 10 à 13, caractérisé par le fait que les shredders (21, 22, 40) et la presse à vis (29) et/ou la bande de triage (13) et/ou un lieu séparé d'égouttage communiquent avec un réservoir de sédimentation d'huile (32) de préférence commun, le réservoir de sédimentation d'huile (32) étant muni de préférence d'un dispositif d'évacuation de la vase, qui est disposé dans la zone du fond et par l'intermédiaire duquel la vase est amenée à une centrifugeuse (23).
